# EUROPÄISCHE PATENTANMELDUNG

(11) **EP 1 221 579 A1**
(43) Veröffentlichungstag der Anmeldung: **10.07.2002**
(21) Anmeldenummer: 01130021.7
(22) Anmeldetag: 18.12.2001
(51) Int. Cl.: F28F 1/08, F28D 7/16

(54) **Wärmetauscherrohr für flüssige und gasförmige Medien**

(30) Priorität: 05.01.2001 DE 10100241
(71) Anmelder: hde Metallwerk GmbH, 58706 Menden (DE)
(72) Erfinder: Geissler, Stefan, Dr.-Ing., 59394 Nordkirchen (DE); Droste, Berthold, 58708 Menden (DE); Wortmann, Engelbert, 58802 Balve (DE); Kautz, Joachim, 58802 Balve (DE); Sczech, Dirk, 44534 Lünen (DE); Hartbecke, Lars, 45527 Hattingen (DE)
(74) Vertreter: Patentanwälte Ostriga & Sonnet

(57) **Zusammenfassung**

Die Erfindung betrifft ein Wärmetauscherrohr (10) für flüssige und gasförmige Medien, insbesondere für Rohrbündel-Wärmetauscher zur Kühlung von Verbrennungsgasen eines Motors, mit einem Rohreintrittsbereich (17), einem Rohraustrittsbereich (17) und einem mittleren Rohrbereich (18), wobei eine Rohrwand sich wiederholende, den Strömungsquerschnitt partiell einengende Strukturen, insbesondere Drallnuten (20), Sicken (21), Einprägungen (22) od. dgl., zur Förderung des Wärmeüberganges aufweist.

Die Aufgabe der Erfindung besteht darin, ein neues Wärmetauscherrohr (10) zu schaffen, dessen Rohrgeometrie zwar eine große Wärmeübertragung ermöglicht, jedoch einen relativ geringen Druckabfall aufweist.

Die Lösung dieser Aufgabe ergibt sich daraus, dass sich in wenigstens einem Teilbereich des Wärmetauscherrohres (10) die Dichte der den Strömungsquerschnitt partiell einengenden Strukturen (20, 21, 22) pro Rohrlängeneinheit und/oder der Betrag der Strömungseinengung ändert.

## Beschreibung

Die Erfindung betrifft ein Wärmetauscherrohr für flüssige und gasförmige Medien, insbesondere für Rohrbündel-Wärmetauscher zur Kühlung von Verbrennungsgasen eines Motors, mit einem Rohreintrittsbereich, einem Rohraustrittsbereich und einem mittleren Rohrbereich, wobei eine Rohrwand sich wiederholende, den Strömungsquerschnitt partiell einengende Strukturen, insbesondere Drallnuten, Sicken, Einprägungen od. dgl., zur Förderung des Wärmeüberganges aufweist.

Ein derartiges Wärmetauscherrohr ist beispielsweise aus der EP 0772017 A2, in welcher ein Wärmetauscherrohr, insbesondere für Rohrbündel-Wärmetauscher von Brennwertheizkesseln, mit etwa kreisförmigen Anschlussquerschnitten und mit Einprägungen zur Verbesserung des Wärmeübergangs beschrieben wird, wobei der zwischen den Anschlussquerschnitten liegende mittlere Rohrteil als flacher Kanal gestaltet ist, dessen Querschnitt an das Volumen der innen durchströmenden Heizgase angepasst ist.

Bei diesen und anderen druckschriftlich nicht belegbaren Wärmetauscherrohren nach dem Stand der Technik wird das Verhältnis von Wärmeübertragungsleistung zu Druckabfall als verbesserungswürdig angesehen.

Die Aufgabe der Erfindung besteht deshalb darin, ein neues Wärmetauscherrohr zu schaffen, dessen Rohrgeometrie zwar eine große Wärmeübertragung ermöglicht, jedoch einen relativ geringen Druckabfall aufweist.

Die Lösung dieser Aufgabe ergibt sich aus den Merkmalen des Anspruchs 1, insbesondere den Merkmalen des Kennzeichenteils, wonach sich in wenigstens einem Teilbereich des Wärmetauscherrohres die Dichte der den Strömungsquerschnitt partiell einengenden Strukturen pro Rohrlängeneinheit und/oder der Betrag der Strömungseinengung ändert.

Durch das erfindungsgemäße Wärmetauscherrohr ist es nun möglich, die beim Stand der Technik üblichen kontinuierlichen, sich wiederholenden, turbulenzfördernden Strukturen so zu verändern, dass der Druckabfall reguliert werden kann. Letztendlich ist es möglich, durch Veränderung der beim Stand der Technik regelmäßigen Strukturen am Ende einer definierten Rohrlänge eines Wärmetauscherrohres einen gewünschten, tolerierbaren Druckabfall bei gleichzeitig hoher Wärmeübertragungsleistung einzustellen.

Bei einer Ausführungsform der Erfindung umfasst der Teilbereich insbesondere den Rohraustrittsbereich, wobei sich dort die Dichte der den Strömungsquerschnitt partiell einengenden Strukturen pro Rohrlängeneinheit/der Betrag der Strömungseinengung verringert.

Dieser Ausführungsform liegt die Erkenntnis zugrunde, dass insbesondere im Bereich des Rohraustritts turbulenzfördernde Maßnahme nur mit einem geringen Effekt hinsichtlich der Wärmeübertragung verbunden sind, jedoch einen relativ großen Druckabfall zur Folge haben. Konkret bedeutet dies, dass man im mittleren Rohrbereich vorhandene turbulenzfördernde Strukturen im Rohraustrittsbereich verringert.

Dabei sind sehr unterschiedliche Ausführungsformen denkbar, die sich beispielsweise darauf beziehen, im Rohraustrittsbereich den Drallwinkel von Drallnuten zu vergrößern bzw. ihre Dralltiefe zu verringern.

Auch ist es denkbar, dass der Sickenabstand vergrößert bzw. die Sickentiefe verringert wird.

Im Zusammenhang mit im mittleren Bereich vorhandenen lokal begrenzten Einprägungen kann man darüber hinaus die Anzahl der Einprägungen pro Flächeneinheit oder deren Prägetiefe im Rohraustrittsbereich verringern.

Auch wäre es denkbar, dass die Lage der Einprägungen im Verhältnis zur Strömungsrichtung verändert wird.

Bei einer besonders bevorzugten Ausführungsform ist es darüber hinaus möglich, dass sich der Strömungsquerschnitt des Rohraustrittsbereiches gegenüber dem mittleren Rohrbereich deutlich vergrößert.

Dieser Ausführungsform liegt die Erkenntnis zugrunde, dass man im Rohraustrittsbereich durch Erweiterung des Strömungsquerschnittes die Strömungsgeschwindigkeit verringern kann, wobei sich dadurch eine Erhöhung des Staudruckes ergibt, welche im Ergebnis dazu führt, dass der Gesamtdruckabfall im Wärmetauscherrohr sinkt.

Weitere Vorteile der Erfindung ergeben sich aus den nachfolgenden Unteransprüchen sowie aus der Beschreibung zahlreicher Ausführungsbeispiele. Es zeigen:
Fig. 1 eine Darstellung eines kompletten Wärmetauschers,
Fig. 2 eine vereinfachte Schnittdarstellung eines Rohrbündels des Wärmetauschers gemäß Fig. 1,
Fig. 3 ein Wärmetauscherrohr mit eingearbeiteten Drallnuten,
Fig. 4 ein weiteres Wärmetauscherrohr mit eingearbeiteten Drallnuten,
Fig. 5 ein Wärmetauscherrohr mit eingearbeiteten Sicken,
Fig. 6 ein Wärmetauscherrohr mit eingearbeiteten Drallnuten sowie einer längsseitigen Aufweitung,
Fig. 7 ein Wärmetauscherrohr mit eingearbeiteten Sicken und einer endseitigen Aufweitung,
Fig. 8 ein Wärmetauscherrohr in der Seitenansicht mit beidseitigen Einprägungen,
Fig. 9 ein Wärmetauscherrohr gemäß Ansichtspfeil IX in Fig. 8,
Fig. 10 ein Wärmetauscherrohr in Seitenansicht und
Fig. 11 ein Wärmetauscherrohr gemäß Ansichtspfeil XI in Fig. 10.

In den Zeichnungen ist ein Wärmetauscher insgesamt mit der Bezugsziffer 10 bezeichnet.

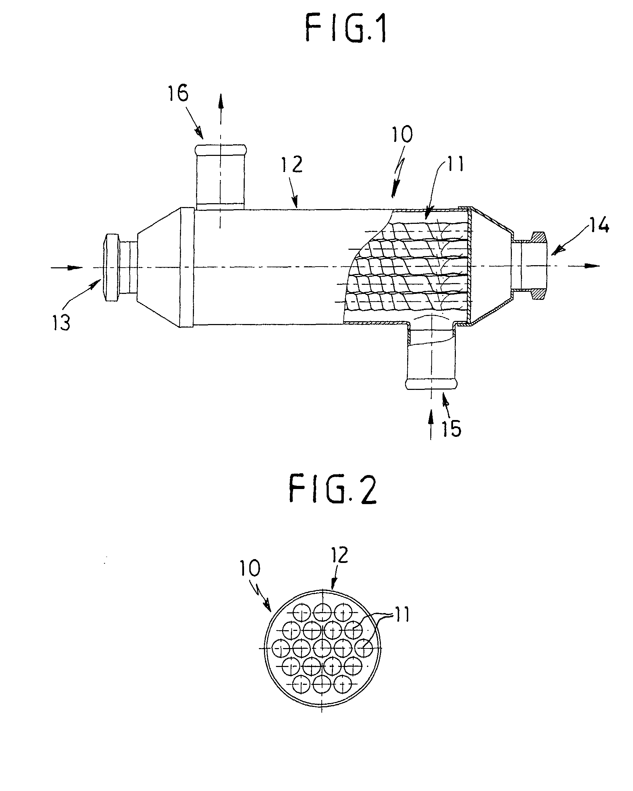

Ein Wärmetauscher 10 weist ein Bündel von Wärmetauscherrohren 11 auf, die in einem Wärmetauschergehäuse 12 angeordnet sind. Das Gehäuse 12 ist mit einer Eintrittsöffnung 13 und einer Austrittsöffnung 14 für das in den Rohren 11 zu kühlende Gas versehen. Darüber hinaus weist das Gehäuse 12 auch eine Eintrittsöffnung 15 und eine Austrittsöffnung 16 für das Kühlmedium auf, welches außerhalb der Rohre 11 innerhalb des Gehäuses vorhanden ist. Im einzelnen ist der Wärmetauscher 10 in den Fig. 1 und 2 dargestellt.

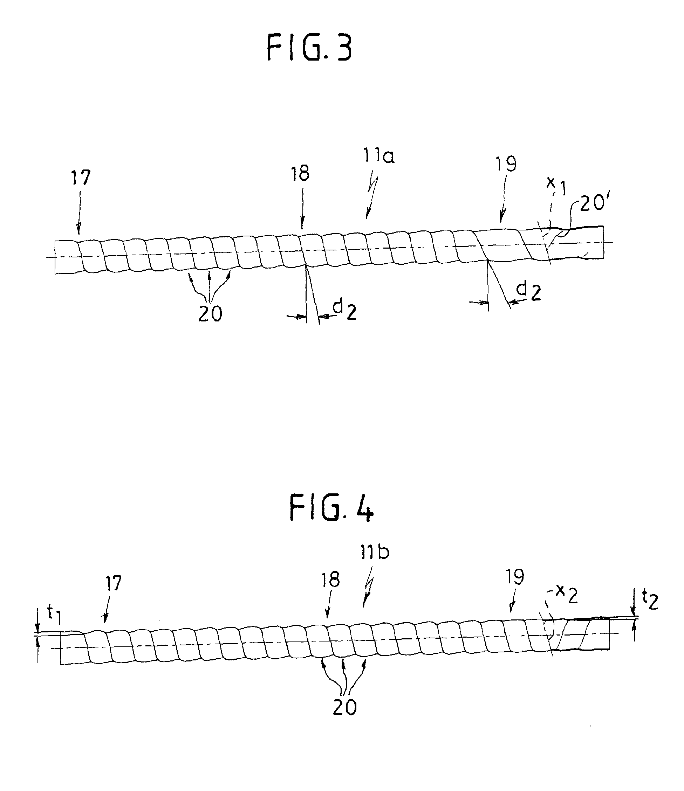

In der Fig. 3 ist ein Wärmetauscherrohr 11 a dargestellt, welches mit einem Rohreintrittsbereich 17, einen mittleren Rohrbereich 18 und einen Rohraustrittsbereich 19 versehen ist. Das Wärmetauscherrohr 11 weist im mittleren Rohrbereich regelmäßige, sich wiederholende Drallnuten 20 mit einem konstanten Drallwinkel d₁ auf. Im Übergang vom mittleren Rohrbereich 18 zum Rohraustrittsbereich 19 ergibt sich jedoch eine Veränderung der Drallnuten 20 durch Vergrößerung des Drallwinkels auf den Betrag d₂. Durch diese Veränderung des Drallwinkels d₁/d₂ vergrößert sich der Abstand der den Strömungsquerschnitt partiell einengenden Strukturen.

Im Rohraustrittsbereich 19 ist eine Schnittlinie x₁ zu erkennen, von der ab das Wärmetauscherrohr 11 aufgeschnitten dargestellt ist. Dies bedeutet, dass man in das Wärmetauscherrohr 11 hineinschaut und den Verlauf einer Drallnut 20 an der Innenumfangsfläche erkennt.

Ein weiteres Wärmetauscherrohr 11 b ist in der Fig. 4 dargestellt. Dieses Wärmetauscherrohr 11 b unterscheidet sich letztlich nur dadurch, dass im Übergang vom mittleren Rohrbereich 18 zum Rohraustrittsbereich 19 nicht der Drallwinkel d₁/d₂ geändert wird, sondern die Dralltiefe t₁, die sich auf die Dralltiefe t₂ verringert. Aufgrund der verringerten Dralltiefe t₁/t₂ verändert sich der Betrag der Strömungseinengung im Rohraustrittsbereich 19.

Auch hier ist auf der rechten Seite einer Schnittebene x₂ das Wärmetauscherrohr 11 b aufgeschnitten dargestellt, so dass man auf die Drallnuten 20' an der Innenumfangsfläche des Rohres 11 b sieht.

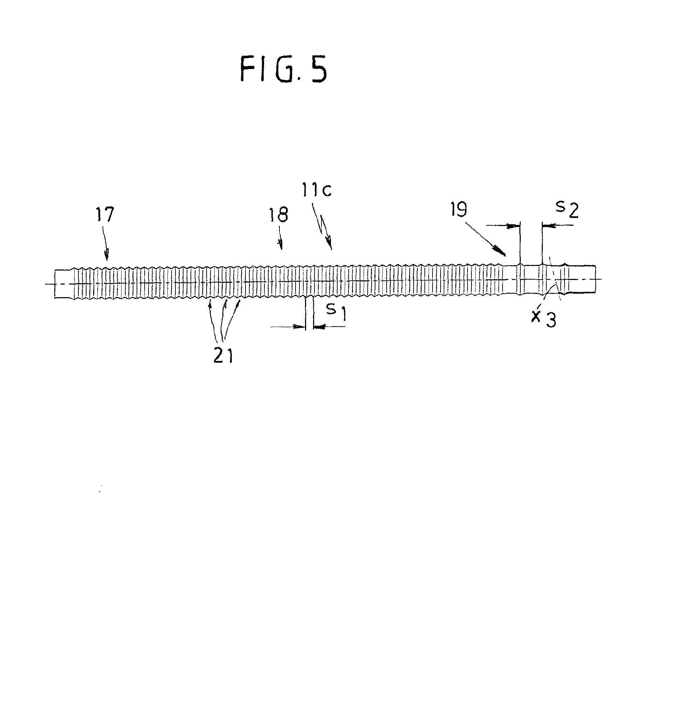

In der Fig. 5 ist ein Wärmetauscherrohr 11 c mit zahlreichen Sicken 21 dargestellt. Hierbei ergibt sich im Rohraustrittsbereich 19 eine Veränderung des Sickenabstandes s₁ in einen größeren Sickenabstand s₂. Auch hier ist rechts einer Schnittebene x₃ das Wärmetauscherrohr 11 c aufgeschnitten dargestellt.

Selbstverständlich ist auch auf nicht dargestellte Weise eine Verringerung der Sickentiefe möglich.

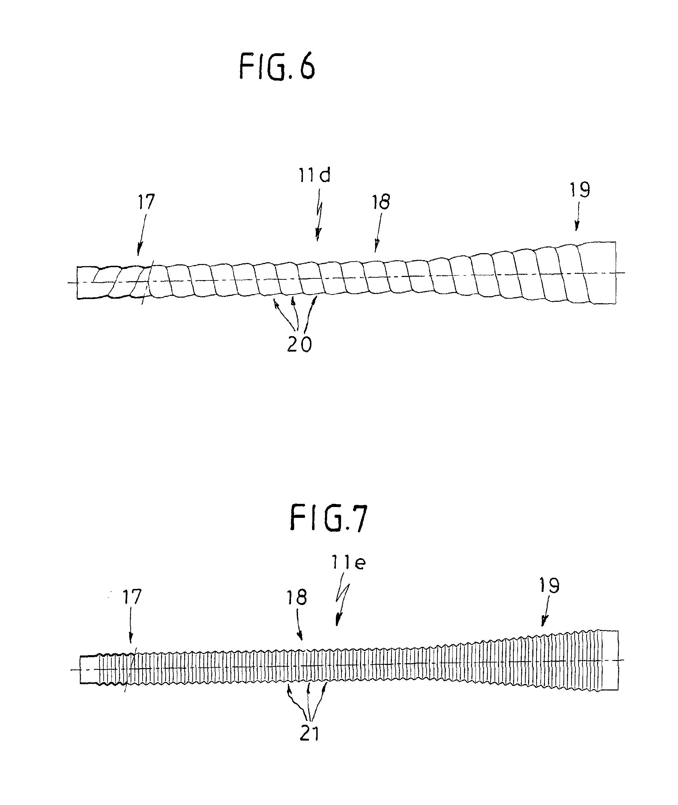

Ein Wärmetauscherrohr 11 d ist in Fig. 6 dargestellt, welches Drallnuten 20 aufweist, deren Drallwinkel d und Dralltiefe t sich zwar im Rohraustrittsbereich nicht verändern, jedoch eine trichterförmige Vergrößerung des Strömungsquerschnitts vorhanden ist. Durch diese Vergrößerung des Strömungsquerschnittes ergibt sich im Rohraustrittsbereich 19 eine Verringerung der kinetischen Energie der Strömung und eine Vergrößerung des Staudrucks, so dass der Druckabfall auf die gesamte Rohrlänge bezogen sich verringert.

Ähnlich ist die Situation bei dem Wärmetauscherrohr 11 e gemäß Fig. 7. Hierbei ist das Wärmetauscherrohr 11 e mit unzähligen Sicken 21 versehen, die einen konstanten Sickenabstand s und auch eine konstante Sickentiefe aufweisen, wobei ebenfalls im Rohraustrittsbereich 19 eine trichterförmige Querschnittsvergrößerung vorhanden ist, die die oben genannten Vorteile aufweist.

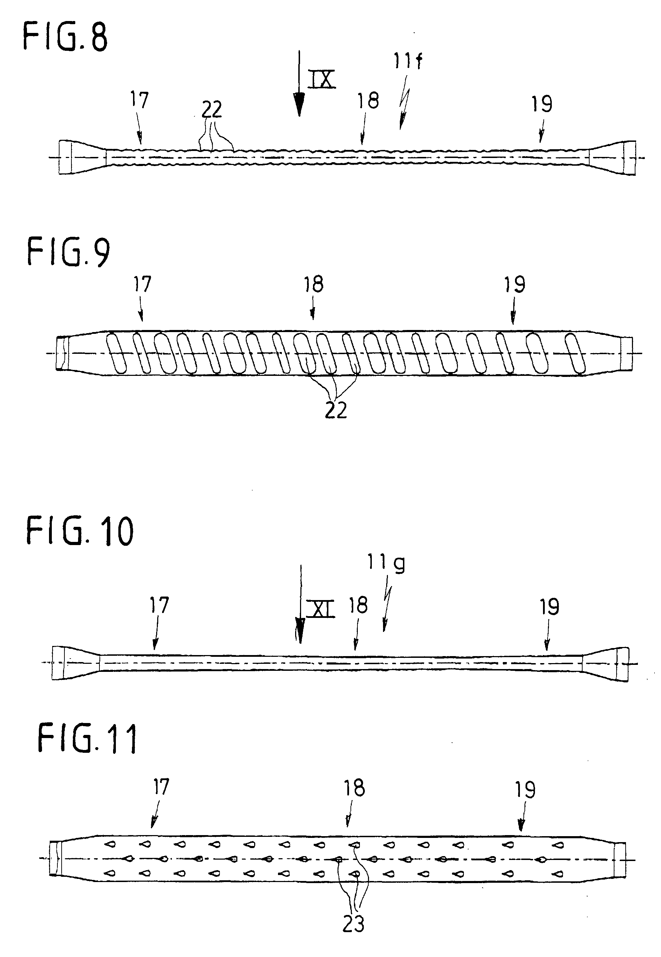

In den Fig. 8 und 9 ist ein Wärmetauscherrohr 11 f dargestellt, welches zweiseitig mit im wesentlichen quer zur Strömungsrichtung angeordneten Einprägungen 22 versehen ist. Man erkennt, dass im Rohraustrittsbereich 19 sich der Abstand der Einprägungen vergrößert.

Letztlich ist in den Fig. 10 und 11 ein Wärmetauscherrohr 11 g dargestellt, welches zweiseitig mit kleinräumigen, strömungsgünstigen Einprägungen 23 versehen ist, die wiederum im Rohraustrittsbereich 19 eine geringere Dichte bzw. größere Abstände voneinander aufweisen. Diese kleinräumigen Einprägungen haben den Vorteil, dass sie eine turbulente Grenzströmung erzeugen, jedoch der von ihnen hervorgerufene Druckabfall gering ist.

Abschließend wird darauf hingewiesen, dass als Fertigungsmethoden für die vorgenannten Ausführungsformen im wesentlichen eine bezüglich der Werkzeugverfahrmöglichkeiten erweiterte Variante der mechanischen Sickenrohr-/Drallrohrfertigung mit Walzscheiben sowie das Hydroformverfahren zur Anwendung kommen können.

## Patentansprüche

1. Wärmetauscherrohr für flüssige und gasförmige Medien, insbesondere für Rohrbündel-Wärmetauscher zur Kühlung von Verbrennungsgasen eines Motors, mit einem Rohreintrittsbereich, einem Rohraustrittsbereich und einem mittleren Rohrbereich, wobei eine Rohrwand sich wiederholende, den Strömungsquerschnitt partiell einengende Strukturen, insbesondere Drallnuten, Sicken, Einprägungen od. dgl., zur Förderung des Wärmeüberganges aufweist, **dadurch gekennzeichnet, dass** sich in wenigstens einem Teilbereich des Wärmetauscherrohres (11) die Dichte der den Strömungsquerschnitt partiell einengenden Strukturen pro Rohrlängeneinheit und/oder der Betrag der Strömungseinengung ändert.

2. Wärmetauscherrohr nach Anspruch 1, **dadurch gekennzeichnet, dass** der Teilbereich den Rohraustrittsbereich (19) umfasst und dass sich dort die Dichte der den Strömungsquerschnitt partiell einengenden Strukturen pro Rohrlängeneinheit / der Betrag der Strömungseinengung verringert.

3. Wärmetauscherrohr nach Anspruch 2, **dadurch gekennzeichnet, dass** im Rohraustrittbereich (19) Drallnuten (20) angeordnet sind, deren Drallwinkel (d₂) größer ist als der Drallwinkel (d₁) der im mittleren Rohrbereich (18) angeordneten Drallnuten (20).

4. Wärmetauscherrohr nach Anspruch 2 oder 3, **dadurch gekennzeichnet, dass** im Rohraustrittsbereich (19) Drallnuten (20) angeordnet sind, deren Dralltiefe (t₁) geringer ist als die Dralltiefe (t₂) der Drallnuten (20) des mittleren Rohrbereichs (18).

5. Wärmetauscherrohr nach einem der Ansprüche 2 bis 4, **dadurch gekennzeichnet**, das im Rohraustrittsbereich (19) Sicken (21) angeordnet sind, deren Abstand (s₁) größer ist als der Abstand (s₂) der Sicken (21) des mittleren Rohrbereichs (18).

6. Wärmetauscherrohr nach einem der Ansprüche 2 bis 5, **dadurch gekennzeichnet, dass** im Rohraustrittsbereich (19) Sicken (21) angeordnet sind, deren Sickentiefe kleiner ist als die Sickentiefe der Sicken (21) des mittleren Rohrbereichs (18).

7. Wärmetauscherrohr nach einem der Ansprüche 2 bis 6, **dadurch gekennzeichnet, dass** im Rohraustrittsbereich (19) lokal begrenzte Einprägungen (22) vorhanden sind, deren Anzahl pro Flächeneinheit kleiner ist als im mittleren Rohrbereich (18).

8. Wärmetauscherrohr nach einem der Ansprüche 2 bis 7, **dadurch gekennzeichnet, dass** im Rohraustrittsbereich (19) lokal begrenzte Einprägungen (22) vorhanden sind, deren Prägetiefe geringer ist als im mittleren Rohrbereich (18).

9. Wärmetauscherrohr nach einem der Ansprüche 2 bis 8, **dadurch gekennzeichnet, dass** die Einprägungen (22) im wesentlichen quer zur Strömungsrichtung angeordnet sind.

10. Wärmetauscherrohr nach einem der Ansprüche 2 bis 9, **dadurch gekennzeichnet, dass** die Einprägungen (23) im wesentlichen in Strömungsrichtung angeordnet sind.

11. Wärmetauscherrohr nach einem der vorangehenden Ansprüche, **dadurch gekennzeichnet, dass** sich der Strömungsquerschnitt des Rohraustrittsbereichs (19) gegenüber dem mittleren Rohrbereich (18) deutlich vergrößert.

12. Wärmetauscherrohr nach Anspruch 10, **dadurch gekennzeichnet, dass** sich der Strömungsquerschnitt kontinuierlich vergrößert.

13. Wärmetauscherrohr nach Anspruch 10, dass sich die umlaufende Rohrwand im Rohraustrittsbereich (19) kontinuierlich trichterförmig erweitert.

14. Wärmetauscherrohr nach Anspruch 10, **dadurch gekennzeichnet, dass** sich der im mittleren Rohrbereich (18) ovale Strömungsquerschnitt in beiden Richtungen seiner längeren Achse erweitert.
